# EUROPEAN PATENT APPLICATION

(11) **EP 4 794 130 A2**
(43) Date of publication of application: **19.08.2026**
(21) Application number: 26153752.6
(22) Date of filing: 23.01.2026
(51) Int. Cl.: H01R 13/422, H01R 13/436, H01R 13/506, H01R 13/52, H01R 13/58

(54) **ELECTRICAL CONNECTOR**

(30) Priority: 23.01.2025 CN 202510106608
(71) Applicant: Aptiv Connection Systems (Nantong) Ltd., Nantong, Jiangsu 226300 (CN); Aptiv Electrical Centers (Shanghai) Co., Ltd., Shanghai 200184 (CN)
(72) Inventor: TIAN, Xiaoxian, Shanghai (CN)
(74) Representative: Bardehle Pagenberg Partnerschaft mbB Patentanwälte Rechtsanwälte

(57) **Abstract**

An electrical connector is disclosed, it comprising: a main housing, wherein the main housing includes a terminal receiving structure, and the terminal receiving structure has a terminal channel formed therein; and a terminal locking member, said terminal locking member is to be inserted into said main housing to lock the terminal in the terminal channel, wherein, a terminal clamping arm is formed on the side of each terminal channel, and a first locking protrusion is formed at an end of the terminal clamping arm, wherein, in each terminal channel, a second locking protrusion is further formed at a position opposite to the first locking protrusion, the first locking protrusion and the second locking protrusion are to lock the terminal in the terminal channel from both sides.

## Description

### Technical Field

This application belongs to the field of connector technology, particularly, relates to electrical connectors used in automotive electrical and electronic architecture.

### Background Technology

Coaxial connector comprises a main housing for accommodating terminals and some cables, as well as a locking portion for locking the terminals. Usually, a locking arm is formed inside the main housing, and terminal locking is achieved through physical interference between the clamping arm and the terminal. When the locking force applied by the locking arm is insufficient, mating connectors will detach. Therefore, there is still space for improvement in the terminal locking mechanism.

### Summary of Invention

The purpose of this application is to provide a connector aimed at solving the technical problem of connector disengagement caused by insufficient terminal locking force in the prior art.

According to one aspect of the invention, an electrical connector is proposed, it comprising: a main housing, wherein the main housing includes a terminal receiving structure, and the terminal receiving structure has a terminal channel formed therein; and a terminal locking member, said terminal locking member is to be inserted into said main housing to lock the terminal in the terminal channel, wherein, a terminal clamping arm is formed on the side of each terminal channel, and a first locking protrusion is formed at an end of the terminal clamping arm, wherein, in each terminal channel, a second locking protrusion is further formed at a position opposite to the first locking protrusion, the first locking protrusion and the second locking protrusion are to lock the terminal in the terminal channel from both sides.

In the above solution of electrical connector, as an optional implementation, the terminal locking member is to insert into the main housing from the mating end of the main housing, and a terminal pressing plate is formed on the terminal locking member, the terminal pressing plate being used to apply a locking force to the terminal clamping arm.

In the above solution of electrical connector, as an optional implementation, the terminal locking member comprises an interlocking positioning plate, and a positioning groove is formed in the terminal receiving structure, the interlocking positioning plate is to insert into the positioning groove, thereby forming an interlock between the terminal locking member and the main housing.

In the above solution of electrical connector, as an optional implementation, the interlocking positioning plate is formed as a simply supported beam structure.

In the above solution of electrical connector, as an optional implementation, a locking protrusion structure is formed on the interlocking positioning plate, and an interlocking protrusion is formed at the entrance of the positioning groove, and the locking protrusion structure and the interlocking protrusion form an interlock.

In the above solution of electrical connector, as an optional implementation, the clamping protrusion structure comprises a first protrusion and a second protrusion, the interlocking protrusion and the first protrusion form a pre-lock, and the interlocking protrusion and the second protrusion form a final-lock.

In the above solution of electrical connector, as an optional implementation, the first locking protrusion is located on a side of the terminal clamp arm facing the terminal channel, and the second locking protrusion is formed on an inner wall of the terminal channel.

In the above solution of electrical connector, as an optional implementation, the terminal locking member comprises a ring-shaped base, from which the terminal pressing plate and the interlocking positioning plate extend.

In the above solution of electrical connector, as an optional implementation, the base of the terminal locking member is to be sleeved onto the front end of the terminal receiving structure.

In the above solution of electrical connector, as an optional implementation, it further comprising a seal and a rear end cap, wherein the rear end cap is to close the rear cavity of the main housing, thereby positioning the seal.

In the above solution of electrical connector, as an optional implementation, a sealing body with a generally conical structure is formed on the rear end cap, and a plurality of insertion protrusions are formed on lateral sides of the sealing body, insertion protrusions are to insert into respective positioning grooves on the seal.

In the above solution of electrical connector, as an optional implementation, there are a pre-locking position and a final-locking position between the rear end cap and the main housing, in the final-locking position, the insertion protrusion is fully inserted into the rectangular positioning groove of the seal.

### Brief description of the drawings

In order to provide a clearer explanation for the technical solution in the embodiments of the present application, a brief introduction will be given to the drawings required for the description of the embodiments. It is apparent that the drawings described below are only some embodiments of the present application. For those skilled in the art, other drawings can be obtained based on these drawings without creative labor.
Figure 1 is a perspective view of the electrical connector provided in the embodiments of the present application.
Figure 2 is an exploded view of the electrical connector shown in Figure 1.
Figure 3 is an exploded view of the electrical connector shown in Figure 1 from another perspective.
Figure 4 is a perspective view of the seal in the electrical connector shown in Figure 1.
Figure 5 is a perspective view of the rear end cap in the electrical connector shown in Figure 1.
Figure 6 is a perspective view of the terminal locking component in the electrical connector shown in Figure 1.
Figure 7 is a front view of the mating end of the electrical connector shown in Figure 1.
Figure 8 is a cross-sectional view taken along the line B-B in Figure 7.
Figure 9 is a perspective view of the main housing in the electrical connector shown in Figure 1.
Figure 10 is a sectional view taken along the A-A line in Figure 1.
Figure 11 is a detailed view of the partial area in Figure 10.
Figure 12 is a sectional view taken along the C-C line in Figure 1.
Figure 13 is a detailed view of the partial area in Figure 12.

### Embodiments

The following will provide a clear and complete description of the technical solution in the embodiments of the present application, in conjunction with the accompanying drawings. Obviously, the described embodiments are only a part of the embodiments of the present application, not all of them. Based on the embodiments in this application, all other embodiments obtained by those skilled in the art without creative labor are within the scope of protection of this application.

In the description of this application, it should be noted that unless otherwise specified and limited, the terms "connected" and "connected" should be broadly understood, for example, they can be fixed connections, detachable connections, or integrated connections; It can be a mechanical connection, an electrical connection, or communication with each other; It can be directly connected or indirectly connected through an intermediate medium, and it can be a connection within two components or an interaction relationship between two components. For ordinary technical personnel in this field, the specific meanings of the above terms in this application can be understood according to the specific situation. In the description of this application, the meaning of "multiple" refers to two or more, unless otherwise specifically limited. In addition, the terms "first" and "second" are only used for descriptive purposes and cannot be understood as indicating or implying relative importance or implying the number of technical features indicated. Thus, the features limited to "first" and "second" may explicitly or implicitly include one or more features.

The following disclosure provides many different implementation methods or examples to achieve different structures of the present application. In order to simplify the disclosure of this application, specific examples of components and settings are described below. Of course, they are only examples and are not intended to limit the scope of this application.

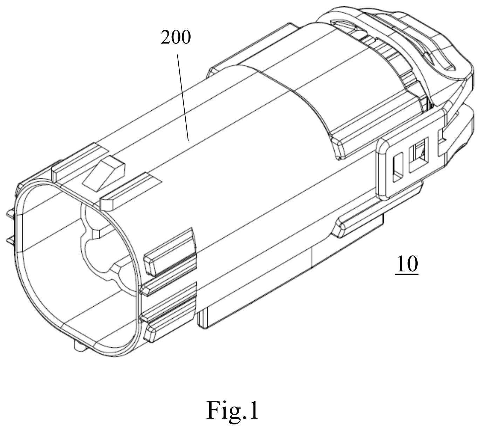

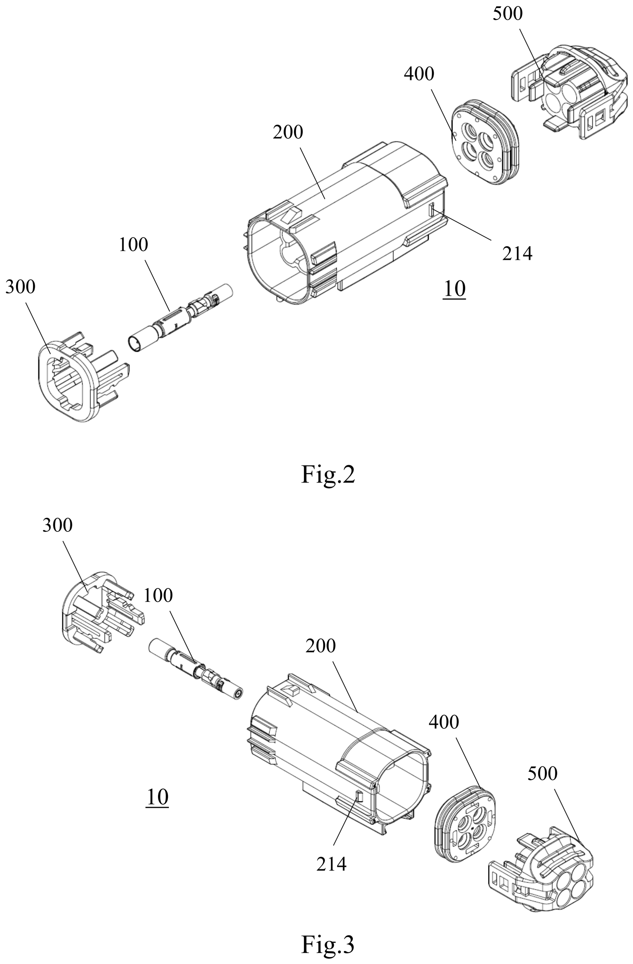

Figure 1 shows a perspective view of an electrical connector 10 according to an embodiment of the present application, Figure 2 is an exploded view of the electrical connector 10 shown in Figure 1, and Figure 3 is an exploded view of the electrical connector 10 shown in Figure 1 from another perspective.

Referring to Figure 1-3, the electrical connector 10 includes a main housing 200, which has a front end (mating) for insertion and a rear end (wiring end) for cable entrance. The main housing 200 has four terminal channels connected to the front end and rear end, and four terminal assemblies 100 are installed in each of the four terminal channels (one of which is shown in Figure 2-3). Seal 400 is installed into the main housing 200 from the rear end, and the rear end cap 500 is used to close the rear cavity of the main housing 200, thereby positioning the seal. The cable (not shown) passes through the cable through-hole in the rear end cap 500 and the cable through-hole in the seal 400, and therefore, the cable is positioned by the rear end cap 500.

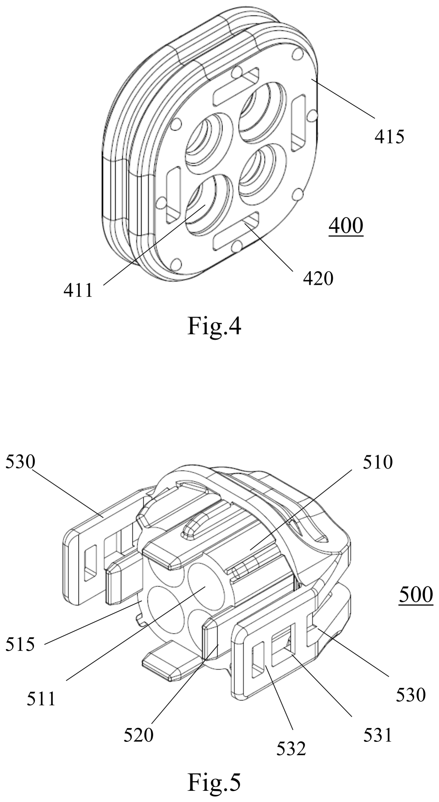

Figure 4 is a perspective view of seal 400, and Figure 5 is a perspective view of rear end cap 500. As shown in Figure 4-5, the seal 400 is provided with seal through holes 411 corresponding to the number of terminal channels, and the rear end cap 500 is provided with cap through holes 511 corresponding to the number of terminal channels. The positions of the seal through holes 411 and the cap through holes 511 are corresponding to each other.

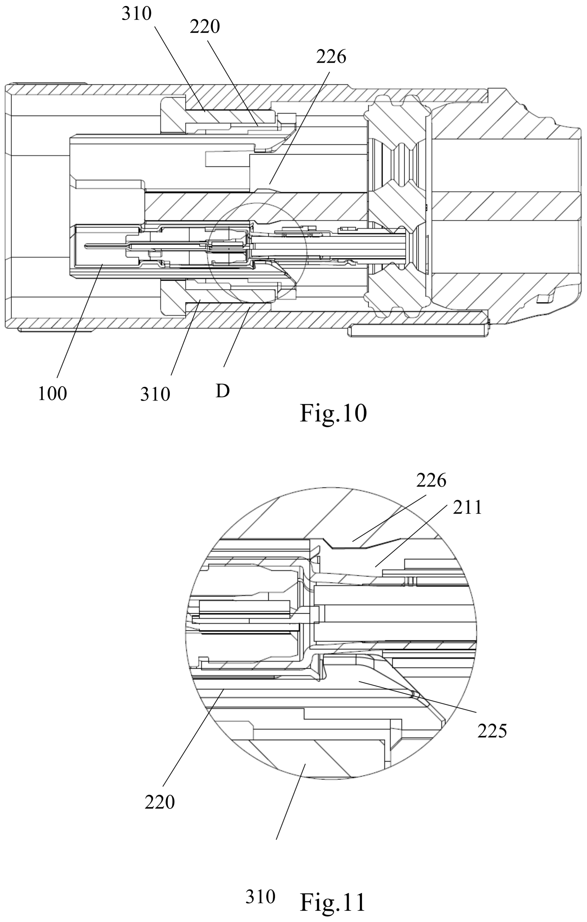

As shown in Figure 5, a sealing body 510 with a roughly conical structure is formed on the rear end cap 500, and four cap through holes 511 are formed in the sealing body 510. The top of the conical structure of the sealing body 510 forms an interfacing face 515 that contacts the rear end face 415 (the end being shown in Figure 10) of the seal 400.

As further shown in Figure 11, four insertion protrusions 520 are formed on the side of the sealing body 510 of the rear end cap 500, four insertion protrusions 520 are used to insert into the four rectangular positioning grooves 420 on the seal 400 shown in Figure 10.

By the inter-guiding between the insertion protrusion 520 and the positioning groove 420, the seal 400 and the rear end cap 500 can be better aligned, thus avoiding damage caused by the terminal assembly 100 due to misalignment of the seal 400 and the rear end cap 500 when inserting the seal 400 into the terminal channel. Meanwhile, the resistance to terminal insertion is reduced.

As further shown in Figure 5, on both sides of the rear end cap 500, there are a pair of clamping arms 530, and on each clamping arm 530, there are a first latch 531 and a second latch 532. It can be understood that in the pre-locked state, the second latch 532 is engaged with the locking protrusion 214 on the main housing 200, and in the final-locked state, the first latch 531 is engaged with the locking protrusion 214 on the main housing 200. Optionally, in the final-locked state, the insertion protrusion 520 fully enters into the positioning groove 214 and is positioned in the positioning groove 420, while in the pre-locked state, the insertion protrusion 520 is basically outside the positioning groove 420.

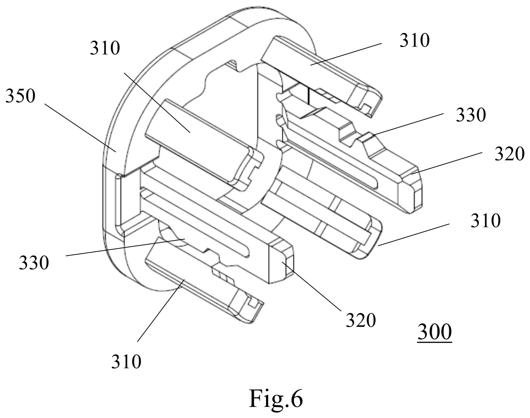

Figure 6 is a perspective view of terminal locking member 300. The terminal locking member 300 comprises a ring-shaped base 350, four terminal pressing plates 310 extending from the base 350, and two interlocking positioning plates 320 arranged between the terminal pressing plates 310. When the terminal pressing plate 310 is inserted into the main housing 200, it will lock and fix the terminals in the terminal channel of the main housing 200. At the same time, while locking the terminals, the interlocking positioning plate 320 also forms an interlocking relationship with the main housing 200 to further limit the relative position of the main housing 200 and the terminal locking piece 300 along the insertion direction, improving the connection stability between the main housing 200 and the terminal locking piece 300, and avoiding loosening under complex stress conditions. The interlocking mechanism between the interlocking positioning plate 320 and the main housing 200 will be further described in the following passages.

It can be understood that the terminal locking member 300 is also referred to as the terminal primary lock reinforcement mechanism, or simply PLR.

As further shown in Figure 6, the interlocking positioning plate 320 can take the form of a simply supported beam, therefore, the interlocking positioning plate 320 includes two parallel extending and spaced apart supporting beams. Furthermore, a locking protrusion structure 330 is formed on the side of one of the supporting beams to enhance the retaining force with the main housing 200. Optionally, the two interlocking positioning plates 320 can adopt a symmetrical structure with each other. For example, as shown in Figure 6, the locking protrusion structure of one interlocking positioning plate 320 faces upwards, and the locking protrusion structure of the other interlocking positioning plate 320 faces downwards. Optionally, each clamping protrusion structure 330 may include two latching grooves for pre-locking and final-locking between the terminal locking member 300 and the main housing 200.

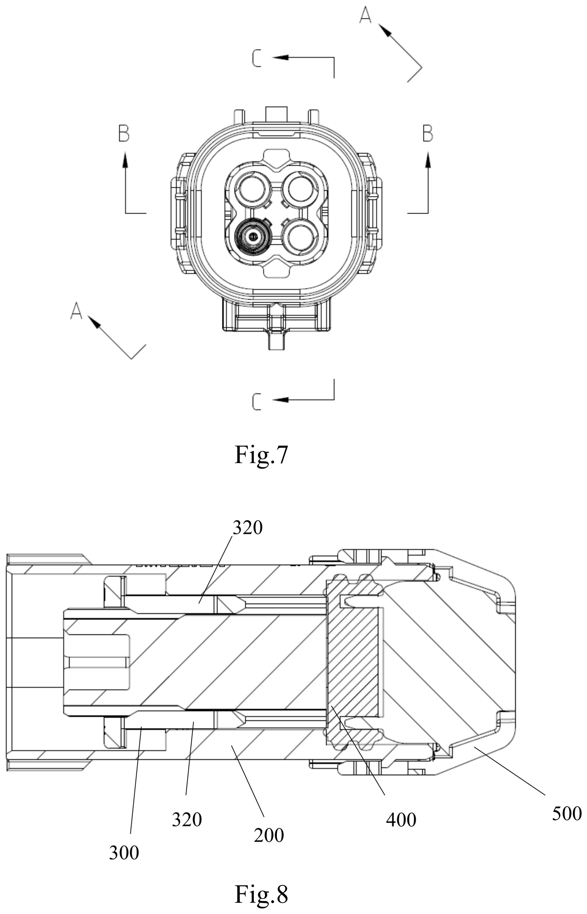

Figure 7 is a front view of the mating end of the electrical connector 10 shown in Figure 1, and Figure 8 is a cross-sectional view of the electrical connector 10 taken along the line B-B in Figure 7. Taking reference to Figure 2-6 and Figure 8, it can be seen that in the final locking state, the rear end cap 500 closes the rear opening of the main housing 200 and presses against the seal 400. At the same time, the terminal locking member 300 is inserted from the front end of the main housing 200, and the two interlocking positioning plates 320 enter the locking channel in the main housing 200, thereby achieving position locking between the locking element 300 and the main housing 200.

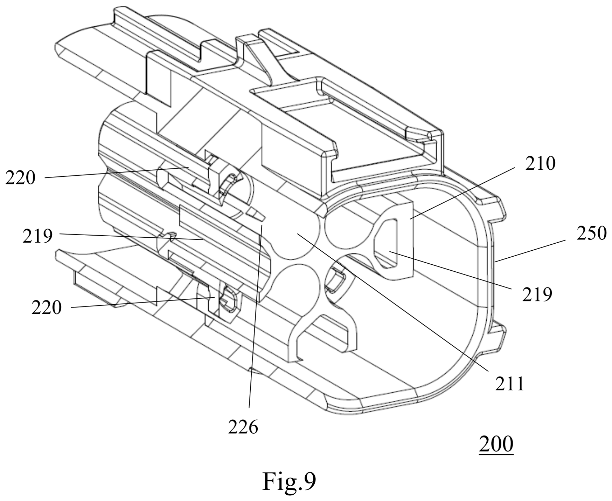

Figure 9 is a half sectional view of the main housing 200. Figure 10 is a cross-sectional view of the electrical connector 10 taken along the A-A line in Figure 7, and Figure 11 shows the details of the circled area D in Figure 10.

As shown in Figure 9, the main housing 200 includes a cylindrical outer shell 250, and a terminal receiving structure 210 is formed in the middle of the outer shell 250. The terminal receiving structure 210 defines four terminal channels 211. Terminal assembly 100 can pass through the cap through-hole 511 of the rear end cap 500, and pass through the seal through-hole 411 of the seal 400, thereby entering the terminal channel 211. On the lateral side of each terminal channel 211, a terminal clamping arm 220 is formed. The terminal clamping arm 220 is used to secure the terminal in the terminal channel under the actuation of the terminal pressing plate 310 of the terminal locking member 300.

Referring further to Figures 10 and 11, the terminal clamping arm 220 extends along the mating direction. When the terminal locking member 300 is in the final locking position, the terminal pressing plate 310 can abut against the terminal clamping arm 222, causing the free end of the terminal clamping arm 222 to deform towards the terminal channel 211. In this way, the terminal clamping arm 220 can extend into the terminal channel 211. The end of the terminal clamping arm 220 is formed with a first locking protrusion 225 facing the terminal channel 211, which can prevent the terminal from exiting based on physical interference.

Furthermore, in the terminal channel 211, a second locking protrusion 226 facing the terminal channel 211 is formed at a position opposite to the first locking protrusion 225 (see Figure 9-11). The cooperation between the second locking protrusion 226 and the first locking protrusion 225 can enhance the locking force on the terminal.

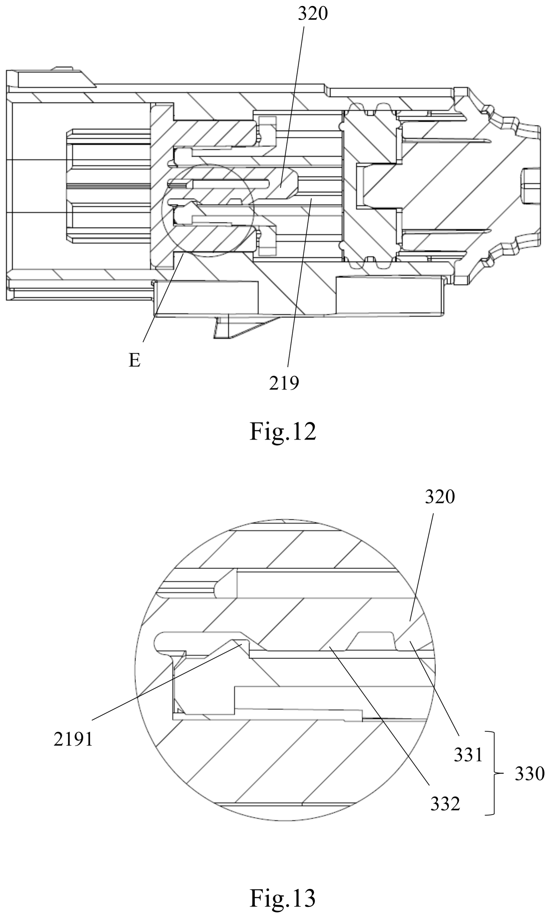

Figure 12 is a cross-sectional view of the electrical connector 10 taken along the C-C line in Figure 7, and Figure 13 shows the details of the circled area E in Figure 12. Referring to Figures 12-13 and 9, two positioning grooves 219 are formed on both sides of the terminal receiving structure 210 to receive the interlocking positioning plate 320. The two interlocking positioning plates 320 of the terminal locking member 300 are inserted into these two positioning grooves 219, thereby forming an interlock between the terminal locking member 300 and the main housing 200. As shown in Figure 13, the clamping protrusion structure 330 includes a first protrusion 331 and a second protrusion 332, and an interlocking protrusion 2191 is formed at the entrance of the positioning groove 219. The physical interference between the interlocking protrusion 2191 and the first protrusion 331 forms a pre-lock, and the physical interference between the interlocking protrusion 2191 and the second protrusion 332 forms a final-lock.

As mentioned earlier, in the implementation of the present application, the terminal locking mechanism includes not only a first locking protrusion 225 formed on the terminal clamping arm 220, but also a second locking protrusion 226 formed on the other side of the terminal channel, and such double-sided locking for the terminals in the terminal channel provides better locking force. In addition, the interlocking positioning plate 320 of the terminal locking member 300 can use a simply supported beam structure to make its structure more robust and provide enhanced locking.

As shown in Figures 8, 10, and 12, the base 350 of the terminal locking component 300 is used to fit onto the sleeve shaped front end of the terminal receiving structure 210.

The above provides a detailed introduction to a connector provided in the embodiments of the present application. Specific examples are applied in the present application to explain the principles and implementation methods of the present application. The above embodiments are only used to help understand the technical solution and core idea of the present application; Ordinary technical personnel in this field should understand that they can still modify the technical solutions described in the aforementioned embodiments, or equivalently replace some of the technical features; And these modifications or substitutions do not deviate from the essence of the corresponding technical solutions from the scope of the technical solutions of the various embodiments of the present application.

## Claims

1. An electrical connector, comprising:
a main housing (200), wherein the main housing (200) includes a terminal receiving structure (210), and the terminal receiving structure (210) has a terminal channel (211) formed therein; and
a terminal locking member (300), said terminal locking member (300) is to be inserted into said main housing (200) to lock the terminal in the terminal channel (211),
wherein, a terminal clamping arm (220) is formed on the side of each terminal channel (211), and a first locking protrusion (225) is formed at an end of the terminal clamping arm (220),
wherein, in each terminal channel (211), a second locking protrusion (226) is further formed at a position opposite to the first locking protrusion (225),
the first locking protrusion (225) and the second locking protrusion (226) are to lock the terminal in the terminal channel from both sides.

2. The electrical connector according to claim 1, wherein the terminal locking member (300) is to insert into the main housing (200) from the mating end of the main housing (200), and a terminal pressing plate (310) is formed on the terminal locking member (300), the terminal pressing plate (310) being used to apply a locking force to the terminal clamping arm (220).

3. The electrical connector according to claim 1 or 2, wherein the terminal locking member (300) comprises an interlocking positioning plate (320), and a positioning groove (219) is formed in the terminal receiving structure, the interlocking positioning plate (320) is to insert into the positioning groove (219), thereby forming an interlock between the terminal locking member (300) and the main housing (200).

4. The electrical connector according to claim 3, wherein the interlocking positioning plate (320) is formed as a simply supported beam structure.

5. The electrical connector according to claim 3 or 4, wherein a locking protrusion structure (330) is formed on the interlocking positioning plate (320), and an interlocking protrusion (2191) is formed at the entrance of the positioning groove (219), and the locking protrusion structure (330) and the interlocking protrusion (2191) form an interlock.

6. The electrical connector according to claim 5, wherein the clamping protrusion structure (330) comprises a first protrusion (331) and a second protrusion (332), the interlocking protrusion (2191) and the first protrusion form a pre-lock, and the interlocking protrusion (2191) and the second protrusion form a final-lock.

7. The electrical connector according to any one of the preceding claims, wherein the first locking protrusion (225) is located on a side of the terminal clamp arm (220) facing the terminal channel (211), and the second locking protrusion (226) is formed on an inner wall of the terminal channel (211).

8. The electrical connector according to any one of the preceding claims when combined with claim 3, wherein the terminal locking member (300) comprises a ring-shaped base (350), from which the terminal pressing plate (310) and the interlocking positioning plate (320) extend.

9. The electrical connector according to claim 8, wherein the base (350) of the terminal locking member (300) is to be sleeved onto the front end of the terminal receiving structure (210).

10. The electrical connector according to any one of the preceding claims, further comprising a seal (400) and a rear end cap (500), wherein the rear end cap (500) is to close the rear cavity of the main housing (200), thereby positioning the seal (400).

11. The electrical connector as claimed in claim 10, wherein a sealing body (510) with a generally conical structure is formed on the rear end cap (500), and a plurality of insertion protrusions (520) are formed on lateral sides of the sealing body (510), insertion protrusions (520) are to insert into respective positioning grooves (420) on the seal (400).

12. The electrical connector according to claim 10 or 11, wherein there are a pre-locking position and a final-locking position between the rear end cap (500) and the main housing (200), in the final-locking position, the insertion protrusion (520) is fully inserted into the rectangular positioning groove (420) on the seal (400).
